# EUROPÄISCHE PATENTANMELDUNG

(11) **EP 3 546 241 A1**
(43) Veröffentlichungstag der Anmeldung: **02.10.2019**
(21) Anmeldenummer: 18165082.1
(22) Anmeldetag: 29.03.2018
(51) Int. Cl.: B44C 5/04

(54) **BEIZBARE DEKORPLATTE**

(71) Anmelder: SWISS KRONO Tec AG, 6004 Luzern (CH)
(72) Erfinder: BRAUN, Roger, 6130 Willisau (CH); STEINMANN, Pius, 6247 Schötz (CH)
(74) Vertreter: Kalkoff & Partner

(57) **Zusammenfassung**

Die Erfindung betrifft ein Verfahren zum Herstellen einer farblich veränderbaren Kunstharzoberfläche oder Lackoberfläche mit den Schritten, Bereitstellen einer Trägerschicht mit einer Unterseite und einer Oberseite, Kerntränken der Trägerschicht mit einem flüssigen Tränkmittel ohne Beizadditiv und mindestens Antrocknen der getränkten Trägerschicht. Um eine dekorative Oberfläche bereitzustellen, die in ihrer Farbgebung vom Endverbraucher besonders einfach verändert werden kann und die besonders kostengünstig und widerstandsfähig ist, ist vorgesehen, dass eine Schicht eines Beschichtungsmittels mit einem Beizadditiv auf die Oberseite der Trägerschicht aufgetragen und getrocknet wird und die Trägerschicht anschließend mit einem Werkstoff verbunden wird, wobei die eine Schicht beim Trocknen und/oder Verbinden auf der Oberseite zu einer offenporigen zumindest weitestgehend transparenten Schicht aushärtet.

## Beschreibung

Die Erfindung betrifft ein Verfahren zum Herstellen einer farblich veränderbaren Kunstharzoberfläche oder Lackoberfläche nach Anspruch 1, einen Werkstoff nach Anspruch 13, ein Dekorpapier nach Anspruch 14 und eine Finishfolie nach Anspruch 15.

Dekorative Oberflächen aus Kunstharz oder Lack sind allgemein bekannt und werden beispielsweise bei Fußbodenbelägen, Wandbelägen, Deckenbelägen oder bei Möbeloberflächen verwendet. Diese weisen eine Dekorschicht auf, die ein Papier mit einem aufgedruckten Dekor oder ein auf einen Untergrund lackiertes Dekor umfasst. Auf der Dekorschicht wird üblicherweise eine Schutzschicht angeordnet, die entweder als kunstharzgetränktes Overlay oder als Lackschicht ausgebildet ist. Zudem ist es bekannt, die Oberfläche mit einem Strukturdekor zu versehen, das bspw. eingeprägt oder auch auflackiert sein kann. Die oberhalb des Dekors angeordneten Schichten sind mindestens semitransparent, damit der Betrachter das Dekor wahrnehmen kann.

Nachteilig ist, dass die farbliche Ausgestaltung derartiger Oberflächen im Nachhinein kaum beeinflusst werden kann. Insbesondere eine durch den Endverbraucher individuelle farbliche Oberflächengestaltung, wie sie beispielsweise bei Vollholz durch das Beizen der Oberflächen erreicht wird, ist bei derartigen Kunstharz- und Lackoberflächen nicht mehr möglich.

Gerade im nordamerikanischen Raum besteht jedoch ein erhöhter Bedarf an dekorativen Oberflächen, die nachträglich durch den Endverbraucher selbst farblich gestaltet werden können, wobei die eigentlichen Dekorstrukturen sichtbar bleiben und nur der Farbton angepasst werden soll. Derartige vom Endverbraucher nachträglich farblich veränderbaren Oberflächen konnten bisher ausschließlich über Vollholzoberflächen, wie beispielsweise bei Massivholz oder auch Holzfurnier, bereitgestellt werden.

Der Erfindung liegt somit die Aufgabe zugrunde, eine dekorative Oberfläche bereitzustellen, die in ihrer Farbgebung vom Endverbraucher besonders einfach verändert werden kann und die besonders kostengünstig und widerstandsfähig ist.

Die Erfindung löst die Aufgabe mittels eines Verfahrens mit den Merkmalen des Anspruchs 1, einem Werkstoff mit den Merkmalen des Anspruchs 13, einem Dekorpapier mit den Merkmalen des Anspruchs 14 und einer Finishfolie nach Anspruch 15. Vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung.

Das erfindungsgemäße Verfahren zum Herstellen einer farblich veränderbaren Kunstharzoberfläche oder Lackoberfläche weist die Schritte auf: Bereitstellen einer Trägerschicht mit einer Unterseite und einer Oberseite, Kerntränken der Trägerschicht mit einem flüssigen Tränkmittel ohne Beizadditiv, mindestens Antrocknen der getränkten Trägerschicht, Auftragen einer Schicht eines Beschichtungsmittels mit einem Beizadditiv auf die Oberseite der Trägerschicht, Trocknen der mindestens einen Schicht mit Beizadditiv, Verbinden der Trägerschicht mit einem Werkstoff, wobei die eine Schicht beim Trocknen und/oder Verbinden auf der Oberseite zu einer offenporigen, zumindest weitestgehend transparenten Schicht aushärtet.

Bei üblichen ausgehärteten Kunstharzoberflächen oder Lackoberflächen ist ein Eindringen von Farbpigmenten in die Schicht nicht mehr möglich. Allenfalls können Farbpigmente auf der Oberfläche abgelegt werden. Die nach dem erfinderischen Verfahren hergestellte Kunstharzoberfläche oder Lackoberfläche mit der offenporig ausgehärteten Oberfläche ermöglicht jetzt eine besonders einfache nachträgliche Farbanpassung (im Weiteren auch als Beizen bezeichnet) der Kunstharzoberfläche oder Lackoberfläche, wie es ansonsten nur beim Beizen von Massivholzoberflächen bekannt ist. Die nachträglich auftragbaren Farbstoffe (Farbpigmente) dringen in die ausgehärtete äußere Schicht ein und färben diese. Unter der farblichen Veränderung wird im Sinne der Erfindung keine nachträgliche farbliche Lackierung, Lasierung oder Ähnliches verstanden.

Vorzugsweise weist die Trägerschicht einen Dekordruck auf, der auf die Oberseite der Trägerschicht aufgedruckt ist. So kann das Dekor bspw. Strukturen eines Dekors zeigen. Insbesondere stellt das Dekor bspw. Holzmaserungen, Steinmaserungen, Steindekore, Fliesendekore oder auch Fantasiedekore dar. Das Dekor kann dabei als farbiges Dekor, Dekor in Grautönen oder auch Schwarz-Weiß-Dekor ausgebildet sein. Das Dekor ist sowohl durch das Tränkmittel als auch durch die eine Schicht weiterhin vom Betrachter sichtbar, so dass sowohl das Tränkmittel als auch die eine Schicht mindestens semitransparent, vorzugsweise vollständig transparentausgebildet sind. Auch nach dem Beizen, d.h., nach dem farblichen Verändern bleibt das auf die Trägerschicht aufgedruckte Dekor erhalten und sichtbar, es verändert sich jedoch der Gesamtfarbton der Kunstharzoberfläche bzw. Lackoberfläche.

So ist es bspw. mit der erfinderischen Oberfläche möglich, einen hellen Gesamteindruck der Kunstharz-/Lackoberfläche, der durch ein an sich helles aufgedrucktes Dekor erzeugt wird, bspw. mittels einer dunklen Beize dunkel zu gestalten. D. h., der aufgetragene Farbstoff (Farbpigmente) erzeugt eine dunkle Einfärbung der Kunstharz-/ Lackoberfläche, wobei die zumindest weitestgehend transparente Schicht auch weitestgehend transparent bleibt und die aufgedruckte Dekorstruktur weiterhin sichtbar ist.

Unter farblich veränderbar wird verstanden, dass der von dem Dekoraufdruck auf der Trägerschicht vorgegebene farbliche Gesamteindruck der Kunstharzoberfläche/Lackoberfläche nachträglich individuell über einen zusätzlichen Farbeintrag in die ausgehärtete Beschichtungsmittelschicht verändert wird. Die nachträgliche Veränderung kann beispielsweise industriell durchgeführt werden, entsprechend einer industriell durchgeführten Beizung von Holzfurnier oder Massivholz. Die erfinderische farblich veränderbare Dekoroberfläche bietet jedoch auch die Möglichkeit, erst zu einem späteren Zeitpunkt, d. h. im nachindustriellen Fertigungsbereich, beispielsweise durch einen montierenden Handwerker oder den Endverbraucher eine farbliche Veränderung durchzuführen. Dadurch, dass die Schicht des Beschichtungsmittels mit dem Beizadditiv zumeist vollflächig aufgetragen wird, gibt es zudem die Möglichkeit, die farbliche Anpassung entweder ebenfalls vollflächig oder auch nur auf Teilflächen durchzuführen. So können gerade durch den Endverbraucher sehr individuelle Farbgestaltungen seiner Kunstharzoberflächen/Lackoberflächen erfolgen.

Wie bereits erwähnt bleiben bei der farblichen Veränderung die durch das gedruckte Dekor erzeugten Dekorstrukturen vorzugsweise weiterhin sichtbar, nur der Grundfarbton der Kunstharzoberfläche/Lackoberfläche wird über die Farbveränderung nochmals verändert. Hierdurch ist eine extrem hohe Individualisierung durch den jeweiligen Endverbraucher möglich. Bereits vorhandene Strukturdekore (3-D-Oberflächen), d.h. strukturierte Oberflächen, bleiben ebenfalls erhalten, da die Schicht aus Beschichtungsmittel die 3-D-Strukturen nachbildet und die Farbpigmente in die Oberfläche eindringen. Bei 3-D-Oberflächen wird zudem deren optische Wirkung durch die Beize verstärkt. Aufgrund der dreidimensionalen Struktur sammelt sich im Bereich von Vertiefungen, die bspw. Holzporen oder Maserung darstellen, mehr Beize als im Bereich von Erhöhung. Diese Bereiche nehmen somit auch die Farbe der Farbpigmente mehr an, als Bereiche in denen weniger Farbpigmente aufgetragen sind. Dagegen werden unstrukturierte Oberflächen gleichmäßig durch die Beize eingefärbt.

Die farbliche Anpassung der Kunstharzoberflächen/Lackoberflächen kann dabei mit denselben Beizmitteln, bspw. einer wasserbasierten Beize, einer ölbasierten Beize oder einer Lösungsmittelbeize, wie auch mit denselben Vorrichtungen, wie bei einer normalen Holzoberflächenbeizung, durchgeführt werden.

Die farblich veränderbare Kunstharzoberfläche/Lackoberfläche ist mehrschichtig aufgebaut und weist zumindest eine mit einem Tränkmittel getränkte Trägerschicht und eine Schicht eines Beschichtungsmittels mit einem Beizadditiv auf der Oberseite der Trägerschicht auf. Die Kunstharzoberfläche/Lackoberfläche ist vor der Durchführung einer farblichen Veränderung vollständig ausgehärtet und kann, wie bereits erwähnt, eine entsprechende Oberflächenstruktur (3-D-Struktur) bspw. als Negativkopie des Pressblechs oder als Lackpore aufweisen. D. h., dass bspw. eine Kunstharzoberfläche mittels Wärme und Druck in einen Endzustand versetz wurde, in dem das Kunstharz beispielsweise als Duroplast vorliegt.

Die Trägerschicht ist insbesondere eine zellulosebasierte Trägerschicht, die bahnförmig oder beispielsweise auch blattförmig bereitgestellt wird. Insbesondere ist die Trägerschicht eine Papierbahn / ein Papierblatt, beispielsweise ein Dekorpapier/Dekorblatt. Die Trägerschicht weist somit eine flächige Unterseite und eine der Unterseite gegenüberliegende flächige Oberseite auf. Die Oberseite entspricht dabei der in ihrer späteren Verwendung von einem Betrachter sichtbaren Seite (Sichtseite). Auf der Oberseite kann das Dekor aufgedruckt sein. Der Dekordruck kann mit üblichen Druckverfahren erzeugt werden. Der Dekordruck ist insbesondere als Holzdekor, d. h. eine Holzoberfläche zeigend ausgebildet.

Die Trägerschicht wird einer Kerntränkung unterzogen. Hierunter wird verstanden, dass die Trägerschicht einmal vollständig, d. h. sowohl die Unterseite als auch die Oberseite als auch in ihrem Materialkern (Bereich zwischen den äußeren Oberflächen), mit einem Kunstharz oder Lack getränkt wird.

Bei der Kerntränkung sollen insbesondere Hohlräume in der Trägerschicht aufgefüllt werden. So sollen beispielsweise bei der Ausbildung der Trägerschicht aus Cellulose, Papier o.ä. insbesondere Zwischenräume zwischen den einzelnen Fasern der Trägerschicht gefüllt werden. Die Kerntränkung kann mit üblichen Tränkvorrichtungen durchgeführt werden, wobei insbesondere ein Tränkbad vorteilhaft ist.

Die Trägerschicht wird unabhängig davon, ob eine Kunstharzoberfläche oder eine Lackoberfläche hergestellt wird, nach der Tränkung mindestens leicht angetrocknet (angeliert) ggf. auch getrocknet, jedoch nicht vollständig ausgehärtet (d.h., sie wird in einem nicht verwendungsfertigen Zustand weiterbearbeitet), wodurch die nachfolgende oberseitige Beschichtung deutlich erleichtert wird und ein besonders guter und unlösbarer Verbund zwischen der beharzten Trägerschicht und der Beschichtungsmittelschicht herstellbar ist. So ist es beispielsweise möglich, bei einer zweiseitigen Tränkung als Zwischenschritt jeweils eine Seite vorzutrocknen, bspw. mittels Wärme, bevor auf die gegenüberliegende Seite für die Kerntränkung ebenfalls ein Tränkmittel aufgetragen wird.

Weitere oder alternative Trocknungsvorgänge werden bspw. nach dem Auftragen der oberseitigen Beschichtungsmittelschicht durchgeführt. Auch kann bspw. nach dem ggf. durchzuführenden Auftrag einer unterseitigen Beschichtung mit einem Klebeharz/Klebstoff eine Trocknung erfolgen.

Die kerngetränkte Trägerschicht kann abhängig vom verwendeten Material der Trägerschicht, dem Tränkmittel, der Tränkmittelmenge und oder dem Trocknungsgrad nach dem Kerntränken als weitestgehend steife Trägerschicht, bzw. zum plattenförmigen weiterbearbeiten oder auch als flexible Trägerschicht, bspw. Finishfolie, die aufrollbar ist ausgebildet sein.

So kann eine flächige, bspw. durch eine entsprechende Trocknung weitestgehend steife Trägerschicht auf einen plattenförmigen Werkstoff ohne Weiteres aufgelegt und in einer Presse überführt werden. Bei einer Ausbildung der Trägerschicht als flexible Schicht kann diese beispielsweise auf den Werkstoff auch aufkaschiert werden. Insofern ist es beispielsweise auch möglich, den Werkstoff mehrseitig mit der Trägerschicht zu beschichten.

Alternativ ist es auch möglich, die ein- oder beidseitig beschichtete Trägerschicht zu trocknen und beispielsweise für ein späteres Verpressen mit dem Werkstoff einzulagern oder beispielsweise auch zu verkaufen. Ein derartiges Zwischenprodukt wird im Weiteren auch Dekorpapier bzw. Finishfolie genannt.

Im Zusammenhang mit der Erfindung werden unter einer Kunstharzoberfläche Systeme aus Tränkmittel und Beschichtungsmittel verstanden, bei denen die vollständige Aushärtung des Tränkmittels und des Beschichtungsmittels unter Einwirkung von Wärme und Druck, bspw. in einer Kurztaktpresse oder einer kontinuierlichen Presse durchgeführt wird. Dabei liegt der ausgeübte Druck oberhalb des atmosphärischen Drucks.

Dagegen wird im Zusammenhang mit der Erfindung unter einer Lackoberfläche ein System aus Tränkmittel und Beschichtungsmittel verstanden, bei dem die vollständige Aushärtung des Tränkmittels und des Beschichtungsmittels drucklos, d.h. bei maximal atmosphärischem Druck und ohne Pressvorrichtung und ausschließlich unter Einwirkung von Wärme, UV-Strahlung, Elektronenstrahlung und/oder Hochfrequenz erfolgt.

Unter einem Beizadditiv wird ein Zusatzstoff verstanden, der im Beschichtungsmittel vorliegt und die Ausbildung einer porösen Oberfläche (offenporig) der als Schicht aufgetragenen und getrockneten bzw. ausgehärteten Beschichtungsmittelschicht bewirkt.

Unter porös/offenporig wird verstanden, dass die ausgehärtete Beschichtung zur Aufnahme von Farbstoffen (Farbpigmenten) innerhalb der Schicht ausgebildet ist. Die Poren sind dabei vorzugsweise von einem unbewaffneten Auge nicht erkennbar. Die ausgehärtete Beschichtung kann dabei vollständig transparent sein, sodass das auf der Trägerschicht aufgedruckte Dekor unbeeinflussbar wahrnehmbar ist. Es ist möglich, dass die ausgehärtete Beschichtung bereits einen ersten Grundfarbton über das Dekor legt, der später mittels des Farbauftrags und der Aufnahme der Farbstoffe in die Beschichtung nochmals verändert wird.

Das Verbinden der Trägerschicht mit einem Werkstoff erfolgt abhängig von der Ausgestaltung der Trägerschicht und der verwendeten Tränkmittel und Beschichtungsmittel entweder mittels eines Klebharzes, wie bspw. eines Melaminharzes, das ebenfalls unter Druck und Wärme aushärtet, oder mittels eines Klebemittels, das bspw. entsprechend eines Lacks aushärtet.

Nach einer Weiterbildung der Erfindung ist vorgesehen, dass als Beschichtungsmittel ein Gemisch umfassend ein Kunstharz mit einem Beizadditiv oder ein Gemisch umfassend einen Lack und ein Beizadditiv aufgetragen wird.

Anzumerken ist, dass unabhängig davon, ob ein Werkstoff, eine Finishfolie oder ein Dekorpapier erzeugt werden soll, eine mit einem Kunstharz getränkte Trägerschicht vorzugsweise auch mit einer ein Beizadditiv umfassenden Beschichtungsmittelschicht auf Basis eines Kunstharzes und eine mit einem Lack getränkte Trägerschicht vorzugsweise auch mit einer ein Beizadditiv umfassenden Beschichtungsmittelschicht auf Basis eines Lacks beschichtet wird.

Gemäß einer Weiterbildung der Erfindung wird als Beizadditiv Kaolin, Tonerde, Kieselerde, Kreide, Glimmer, Quarzsand, Silikat, Zellulose, Naturfasern, Glaskugeln oder Glasmehl verwendet. Kaolin kann bspw. als hydratisiertes Aluminiumsilikat eingesetzt werden. Vorzugsweise können die Beizadditive silanisiert sein, insbesondere Glimmer, Glaskugeln und/oder Glasmehl. Besonders bevorzugt wird Kaolin in hydrierter und/oder kalzinierter Form eingesetzt, wobei eine Mischung, bspw. im Verhältnis von 50Gew. %: 50Gew. %, der beiden Formen vorteilhaft ist. So ermöglicht die kalzinierte Form eine besonders gute Fixierung der Beizfarben, während die hydratisierte Form transparenter ist, und somit eine reduzierte Abdeckung des Dekors verhindert. Die bevorzugten Beizadditive können sowohl bei einem als Lack ausgebildeten Beschichtungsmittel als auch bei einem als Kunstharz ausgebildeten Beschichtungsmittel verwendet werden.

Weiter wird vorzugsweise silanisiertes Kaolin verwendet, da dieses zusätzlich die Haftung der Beizfarbe verbessert. Dieses kann als Gemisch mit nicht silanisiertem Kaolin eingesetzt werden. Besonders vorteilhaft beträgt dabei der Anteil des silanisierten Kaolins zwischen 50 Gew.-% bis 80 Gew.-% des gesamten Kaolinbedarfs.

Kaolin und Kreide erzeugen zudem bei als flüssige Beize aufgetragenen Farbstoffen einen Saugeffekt, mittels dem die Farbstoffe besonders einfach in die Beschichtung eingetragen werden. Zudem erfolgt bei Kaolin und Kreide eine besonders gute Fixierung der Farbstoffe in der Beschichtung.

Um den Eintrag des Farbstoffes in die Beschichtung weiter zu verbessern und damit auch die Einfärbung der Oberfläche besonders einfach auszugestalten beträgt nach einer Weiterbildung der Erfindung der Gewichtsanteil des Beizadditivs am Beschichtungsmittel vor dem Auftragen der Beschichtung 10 Gew.-% bis 60 Gew.-%, bevorzugt 10 Gew.-% bis 50 Gew.-%, besonders bevorzugt 20 Gew.-% bis 50 Gew.-%, vorzugsweise 30 Gew.-% bis 50 Gew.-%. Die bevorzugten Gewichtsverhältnisse bei der noch aufzutragenden Beschichtung gewährleisten eine besonders gute und gleichmäßige offenporige Ausbildung der Oberfläche, sodass auch die Aufnahme der Farbpigmente in die Kunstharzoberfläche/Lackoberfläche bzw. die Fixierung dieser in der jeweiligen Oberfläche besonders gleichmäßig und gut erfolgen kann.

Nach einer Weiterbildung der Erfindung wird als Beschichtungsmittel ein Kunstharz oder ein Lack auf Basis eines Aminoplasten, insbesondere einem Harnstoffharz, wie UF oder MUF, von Acrylat, PU, Phenolharz, Polyester, Alkyd, Nitrocellulose oder Latex oder ein Gemisch von mindestens zwei der vorgenannten Stoffe verwendet.

Dabei wird besonders bevorzugt als Beschichtungsmittel mit Beizadditiv zum Herstellen einer Kunstharzoberfläche ein Kunstharz-Kaolin-Gemisch, insbesondere ein Harnstoffharz-Kaolin Gemisch wie beispielsweise ein Gemisch aus einem UF-Harz und Kaolin oder MUF-Harz und Kaolin verwendet, da bei diesen Kombinationen eine besonders gleichmäßige Verteilung der Beizadditive im Beschichtungsmittel und eine besonders gute Bindung der nachträglich aufzutragenden Beize in der Schicht aus Beschichtungsmittel ermöglicht wird.

Bei der Herstellung von Lackoberflächen ist als Beschichtungsmittel mit Beizadditiv ein Lack auf Basis von Acrylat oder PUR mit einem Beizadditiv auf Basis von Kaolin besonders vorteilhaft, da -wie oben zur Kunstharzoberfläche ausgeführt- auch bei diesen Kombinationen eine besonders gleichmäßige Verteilung der Beizadditive im Beschichtungsmittel und eine besonders gute Bindung der nachträglich aufzutragenden Beize in der Schicht aus Beschichtungsmittel ermöglicht wird.

Nach einer Weiterbildung der Erfindung wird als Tränkmittel ein Kunstharz oder Lack auf Basis eines Aminoplasten, insbesondere einem Harnstoffharz, wie UF-Harz oder auf Basis von Acrylat, PUR, Phenolharz oder ein Gemisch der vorgenannten Harze verwendet. Unabhängig von der Basis des Tränkmittels umfasst dieses keine Beizadditive. Dabei wird bei der Herstellung von Kunstharzoberflächen insbesondere Harnstoffharz verwendet, während bei der Herstellung von Lackoberflächen insbesondere Acrylate oder PUR eingesetzt werden.

Grundsätzlich ist es von Vorteil, wenn die einzelnen Harz- oder Lacksysteme für die Kerntränkung und für die oberseitig aufgetragene Beschichtung aufeinander abgestimmt sind, um beispielsweise eine besonders gute Verklebung miteinander zu erreichen und Delaminierungseffekte zu verhindern.

Die Schicht eines Beschichtungsmittels kann flüssig aufgetragen werden. Hierfür ist nach einer Weiterbildung der Erfindung vorgesehen, dass der Auftrag des Beschichtungsmittels auf die Oberseite der Trägerschicht mittels einer Walzvorrichtung, eines Rakels oder einer Sprühvorrichtung erfolgt. Insbesondere erfolgt dabei der Auftrag des Beschichtungsmittels ausschließlich auf der Oberseite. So wird für den Beschichtungsmittelauftrag bspw. auch kein Tränkbad verwendet.
Alternativ und gerade bei Systemen aus Kunstharz, kann anstatt eines flüssigen Auftrages der Beschichtungsmittelschicht eine Beschichtungsmittelschicht bspw. auch als Tränkmittel für ein Overlay genutzt werden, so dass die Beschichtungsmittelschicht durch ein Overlay gebildet wird, dass mit einem Beschichtungsmittel mit Beizadditiv getränkt wurde. Das Overlay wurde mit der Trägerschicht bspw. unter Einwirkung von Wärme und Druck verpresst und ausgehärtet. Das Overlay erfüllt in dieser Ausführung zwei Funktionen. Zum einen dient es weiterhin als Schutzschicht, zum anderen erzeugt es die Beizbarkeit der Oberfläche.

Dagegen ist es bei einer Lackoberfläche bspw. möglich, die für die Beizbarkeit verantwortliche Beschichtungsmittelschicht mit Beizadditiv weiterhin flüssig aufzutragen, und diese zusätzlich als Schutzschicht entsprechender üblicher Schutzschichten von Lackoberflächen auszubilden. D.h., die Beschichtungsmittelschicht kann zudem Zusatzstoffe wie Korund o. ä umfassen, die eine Verstärkung der Beschichtungsmittelschicht gegen äußere Einflüsse bewirken. Insofern kann auch hier mit der Beschichtungsmittelschicht eine doppelte Wirkung (Schutz und Beizbarkeit) erreicht werden.

Für die abschließende Verwendung werden die farblich anpassbaren Trägerschichten auf einen weiteren Werkstoff (einen Werkstoffträger) angeordnet. Dies erfolgt wiederum abhängig von der Ausführung als Lackoberfläche oder als Kunstharzoberfläche. Dabei kann der Auftrag auf den Werkstoff entweder direkt im Anschluss oder auch mit zeitlichem Abstand erfolgen, sodass die farblich anpassbaren Trägerschichten als Dekorpapier oder Finishfolien vorliegen.

Gerade bei der Verwendung von Harnstoffharzen als Tränkmittel ist eine direkte Verbindung zwischen der getränkten Trägerschicht und dem Werkstoff schwierig, da Harnstoffharze keine gute Klebeverbindung ermöglichen. So wird nach einer Weiterbildung der Erfindung eine Schicht Klebeharz auf die Unterseite der Trägerschicht aufgetragen, die unter Einwirkung von Druck und Wärme die Trägerschicht mit dem Werkstoff verklebt.

Als Klebeharz wir insbesondere eine Kunstharzschicht auf Basis von Melamin oder Phenol angeordnet. Der Auftrag erfolgt wie beim Beschichtungsmittel vorzugsweise mittels einer Walzenanordnung, eines Rakels oder einer Sprühvorrichtung. Dabei hat insbesondere Melamin den Vorteil, dass es zu einer transparenten Schicht ausgehärtet werden kann, sodass von der Unterseite keine farbliche Veränderung, beispielsweise ein dunkler Hintergrund, entstehen kann.

Die Anordnung kann dabei derart erfolgen, dass entweder mindestens eine Schicht Klebeharz auf die Oberseite des Werkstoffes oder mindestens eine Schicht Klebeharz auf die Unterseite der Trägerschicht aufgetragen wird. Alternativ kann auch sowohl auf die Oberseite des Werkstoffes als auch auf die Unterseite der Trägerschicht zumindest eine Schicht Klebeharz aufgetragen werden.

Abhängig von dem Klebeharz wird dieser entweder aufgelegt (bei festem Zustand) oder aufgetragen (bei flüssigem Zustand).

So ist es beispielsweise denkbar, dass das Klebeharz in fester Form, beispielsweise als Folie vorliegt und dementsprechend beim Anordnen zwischen dem Werkstoff und der Trägerschicht auf den Werkstoff und/oder auf die Oberseite der Trägerschicht aufgelegt wird. Besonders bevorzugt ist jedoch, dass auf die Oberseite des Werkstoffes und/oder die Unterseite der Trägerschicht ein flüssiges Klebeharz aufgetragen wird. Sowohl das flüssig aufgetragene Klebeharz kann nach dem Auftragen vorgetrocknet werden. Dies kann beispielsweise mittels Wärme erfolgen.

Das Verpressen der (kunstharzgetränkten und mit einem Kunstharz-Beschichtungsmittel auf der Oberseite versehenen) Trägerschicht mit dem Werkstoff erfolgt beispielsweise in einer üblichen Holzwerkstoffpresse. Abhängig von der Ausführung der Materialien kann diese beispielsweise als Kurztaktpresse oder auch als kontinuierliche Presse ausgebildet sein. Das Verpressen erfolgt dabei bspw. gleichzeitig mit dem Einwirken von Wärme und Druck auf die Kunstharzoberflächen. Insbesondere bei Werkstoffen, die nicht plattenförmig, sondern beispielsweise bogenförmig, rund oder ähnlich ausgeformt sind, können auch alternative Pressvorrichtungen eingesetzt werden.

Alternativ ist nach einer Weiterbildung der Erfindung vorgesehen, dass die getrocknete Trägerschicht zum Verbinden mit einem Klebstoff auf einen Werkstoff aufkaschiert wird, wobei als Klebstoff insbesondere eine Hotmelt, PUR oder ein PVAC-Leim verwendet wird. Das Aufkaschieren erfolgt dabei insbesondere bei Trägerschichten mit Lackoberflächen, kann aber auch bei Kunstharzoberflächen erfolgen, die bereits vollständig ausgehärtet wurden.

Unter einem Werkstoff wird grundsätzlich ein Werkstoffträgermaterial verstanden, das mit der Trägerschicht verbunden wird. D. h., der Werkstoff kann wie beispielsweise auch das Trägermaterial als ein oder mehrere miteinander verklebte Lagen Papier, beispielsweise als Kraftpapier ausgeführt werden. Insofern kann mittels des Verfahrens eine Art HPL oder CPL erzeugt werden. Nach einer Weiterbildung der Erfindung ist jedoch vorgesehen, dass als Werkstoff ein Wood-Plastic-Composite (WPC) oder ein Holzwerkstoff, insbesondere ein Faserwerkstoff, CDF-Werkstoff, MDF-Werkstoff, HDF-Werkstoff, Spanwerkstoff oder OSB-Werkstoff, verwendet wird. Unter WPC werden dabei auch entsprechende Abwandlungen mit Papier oder Bambus als Füllstoff verstanden.

Der Werkstoff kann grundsätzlich jede beschichtete Form aufweisen. So kann der Werkstoff bogenförmige Oberflächen, beispielsweise auch als runde Stange ausgebildet sein. Vorteilhaft kann der Werkstoff die Form einer rechtwinkligen Stange aufweisen. Hierdurch könnten beispielsweise bei einer allseitigen Beschichtung auch beizbare Rahmenbauteile für Möbeltüren mit einer entsprechenden Kunstharzoberfläche hergestellt werden.

Besonders bevorzugt wird ein plattenförmiger Werkstoff, insbesondere eine Faserzementplatte. Gipsfaserplatte, WPC-Platte oder eine Holzwerkstoffplatte verwendet. Diese können in vorteilhafter Weise beispielsweise für Wandbeläge, Deckenbeläge, Fußbodenbeläge oder auch Füllungen für Möbeltüren verwendet werden. Gerade im Bereich des Innenausbaus für Wandbeläge, Deckenbeläge, Fußbodenbeläge oder Möbel werden dabei Holzwerkstoffplatten wie beispielsweise CDF-Platten, MDF-Platten, HDF-Platten, Spanplatten oder OSB-Platten verwendet. Dementsprechend kann beispielsweise auch ein stangenförmiger Werkstoff aus entsprechendem Faserzementmaterial, Gipsfasermaterial, WPC-Material oder Holzwerkstoffmaterial, wie MDF-, HDF-, CDF-Span- oder OSB-Material hergestellt sein.

Weiter wird die Aufgabe gelöst durch einen Werkstoff mit einer farblich veränderbaren Kunstharzoberfläche oder Lackoberfläche mindestens aufweisend eine mit dem Werkstoff verbundene Trägerschicht, wobei die Trägerschicht mit einem Tränkmittel ohne Beizadditiv kerngetränkt ist, einen zwischen der Unterseite der Trägerschicht und der Oberseite des Werkstoffes angeordneten Klebeharz oder Klebemittel und eine auf der Oberseite der Trägerschicht angeordnete, zumindest weitestgehend transparente, offenporige und ausgehärtete Schicht eines Beschichtungsmittels mit einem Beizadditiv. Die Trägerschicht umfasst dabei vorzugsweise ein auf der Oberseite aufgedrucktes Dekor, das durch die Schicht aus Beschichtungsmittel sichtbar ist.

Mit dem erfinderischen Werkstoff mit farblich veränderbarer voll ausgehärteter Kunstharzoberfläche oder Lackoberfläche wird eine gegenüber äußeren Einflüssen widerstandsfähige Kunstharzoberfläche oder Lackoberfläche bereitgestellt, die nachträglich nach dem vollständigen Aushärten farblich angepasst (gebeizt) werden kann. Eine derartige farbliche Anpassung ist bisher insbesondere nur durch das Beizen von Massivholzoberflächen bekannt. Die farbliche Anpassung kann dabei insbesondere von dem Endverbraucher durchgeführt werden.

Die nachträgliche farbliche Bearbeitung kann dabei insbesondere mittels üblicher Holzbeizen, insbesondere üblicher Wasserbeizen, Ölbeizen oder Lösemittelbeizen für Holzoberflächen erfolgen. Dabei wird die durch das Dekor vorgegebene Grundfarbe der Kunstharzoberfläche nachträglich, d. h. nach dem eigentlichen industriellen Fertigstellen der Kunstharzoberfläche individuell verändert.

Der erfinderische Werkstoff ist gegenüber den beizbaren Massivholzoberflächen deutlich kostengünstiger und widerstandsfähiger gegenüber äußeren Einflüssen.

Ferner wird die Erfindung gelöst durch ein Dekorpapier mit einer farblich veränderbaren Kunstharzoberfläche oder Lackoberfläche, umfassend eine als bspw. Dekorpapier ausgebildete Trägerschicht mit einer Unterseite und einer Oberseite, die mit einem Tränkmittel kerngetränkt ist und keine Beizadditive umfasst, einer auf die Oberseite der Trägerschicht aufgetragenen und zumindest getrockneten Schicht eines Beschichtungsmittels mit einem Beizadditiv, das mit dem vollständigen Aushärten eine zumindest weitestgehend transparente und offenporige Oberfläche ausbildet. Wie bereits oben beschrieben, kann gerade bei Dekorpapieren anstelle des Auftrages eines flüssigen Beschichtungsmittels mit Beizadditiv dieses auch als Tränkmittel für ein Overlay eingesetzt werden, dass mit dem Dekorpapier verpresst wird. Die Schicht aus Beschichtungsmittel kann insofern gerade bei Kunstharzoberflächen durch ein Overlay gebildet werden, das mit einem Beschichtungsmittel mit Beizadditiv getränkt wurde.

Eine besondere Ausführungsform des Zwischenproduktes Dekorpapier sieht zudem einen ergänzenden Auftrag eines Klebeharzes auf der Unterseite der kunstharzgetränkten Trägerschicht vor, wobei als Klebeharz insbesondere Melamin angeordnet ist.

Das Dekorpapier kann als Zwischenprodukt aus dem beschriebenen Herstellungsverfahren erzeugt werden. Dabei erfolgt in jedem Fall zumindest ein Trocknungsvorgang nach der Kerntränkung und dem Auftragen der Beschichtung auf die Oberseite, wobei auch jeweils nach der Kerntränkung und nach dem Auftragen eine entsprechende Trocknung durchgeführt werden kann. Das Dekorpapier weist insbesondere eine Kunstharzoberfläche auf, die vorgetrocknet ist und auf der ein Beschichtungsmittel und Beizadditiv aufgetragen ist, das ebenfalls ein Kunstharz enthält.

Letztlich wird die Erfindung gelöst durch eine Finishfolie mit einer farblich veränderbaren vorgetrockneten Lackoberfläche umfassend eine Trägerschicht mit einer Oberseite und einer Unterseite, wobei die Trägerschicht mit einem Tränkmittel kerngetränkt ist, das kein Beizadditiv umfasst und eine auf der Oberseite aufgetragene und ausgehärteten Schicht eines Beschichtungsmittels, das einen Lack mit einem Beizadditiv umfasst und eine offenporige Oberfläche ausbildet. Dabei kann die Tränkung der Trägerschicht der Finishfolie insbesondere mit einem Tränkmittel auf Basis von UF, MUF, Phenolharz, Acrylat, Polyester, Alkyd, Nitrocellulose, Latex, einem Tränkmittelgemisch oder einer Kombinationstränkung von Tränkmitteln von mindestens zwei Tränkmitteln auf vorgenannter Basis erfolgen. Dabei kann insbesondere ein Tränkmittel auf Basis von UF, MUF oder Phenolharz und als Kunstharz ausgebildet sein. Für eine Schutzschicht bzw. die Schicht aus Beschichtungsmittel mit Beizadditiv ist ein UV-Lack besonders geeignet.

Das Dekorpapier wie auch die Finishfolie kann als Zwischenprodukt aus dem beschriebenen Herstellungsverfahren erzeugt werden. Dabei erfolgt in jedem Fall zumindest ein Trocknungsvorgang nach der Kerntränkung und dem Auftragen der Beschichtung auf die Oberseite, wobei auch jeweils nach der Kerntränkung und nach dem Auftragen eine entsprechende Trocknung durchgeführt werden kann. Die Trägerschicht der Finishfolie kann bspw. als Kunststofffolie sein, ist vorzugsweise jedoch als Cellulosebahn ausgebildet.

Das der Herstellung der Kunstharzoberfläche bzw. der Lackoberfläche nachfolgende, farbliche Verändern (Beizen) der ausgehärteten Kunstharzoberfläche/Lackoberfläche kann die Schritte umfassen: Auftragen eines Farbstoffes, insbesondere einer Farbbeize auf die ausgehärtete Beschichtung, wobei der Farbstoff in die Beschichtungsmittelschicht eindringt und den Gesamtfarbton der Kunstharzoberfläche/Lackoberfläche verändert, gegebenenfalls Abtragen des überschüssigen Farbstoffes und/oder Trocknung des aufgetragenen und eingedrungenen Farbstoffes, und ggf. Auftragen einer Schutzschicht, beispielsweise einer weiteren Kunstharzschicht oder einer Lackschicht auf die farblich angepasste Beschichtung.

Neben der Einbindung einer Schicht Beschichtungsmittel mit Beizadditiv bestehen verschiedene weitere Möglichkeiten eine Lackoberfläche oder Kunstharzoberfläche derart auszugestalten, dass sie im voll ausgehärteten Zustand zur Aufnahme von Beizmitteln fähig und somit und farblich veränderbar sind. Diese Maßnahmen können insbesondere anstatt einer Beschichtungsmittelschicht mit Beizadditiv eingesetzt werden.

Eine Möglichkeit besteht darin, bei Lackschichten, insbesondere Lackschichten auf Acrylatbasis, zumindest die außen liegende Lackschicht mittels des Trocknungsprozesses entsprechend porös auszugestalten. Dabei erfolgt die Trocknung bspw. über mehrere Trocknungsstufen, wodurch bei der äußeren Schicht eine poröse, offene, d.h., nicht vollständig geschlossene Oberfläche ausbildet werden kann, die eine mit dem unbewaffneten Auge nicht sichtbare Porigkeit aufweist. In die Poren kann das Beizmittel eindringen und fixiert werden.

Eine weitere Möglichkeit besteht in der erhöhten Zugabe von Mattierungsmitteln, wie bspw. Sand, Glas-Staub, mineralischem Pulver, Kieselsäure, Silikat, Polyethylen und/oder eines Copolymerisat in mindestens die außen liegende Schicht der Lackoberfläche oder Kunstharzoberfläche. Durch die erhöhte Zugabe der Mattierungsmittel kann ebenfalls eine Porösität der entsprechenden Schicht erreicht werden, so dass auch hier Beizmittel (Farbpigmente in Lösungsmittel) in die außenliegende Schicht eindringen und fixiert werden können.

Bei Kunstharzoberflächen besteht zudem die Möglichkeit das Dekorpapier oder bei Ausbildung einer Kunstharzoberfläche mit Overlay das Overlay mager zu Imprägnierung. D. h, das Dekorpapier bzw. das Overlay wird gegenüber einer üblichen Imprägnierung mit einer deutlich geringeren Kunstharzmenge imprägniert, beispielsweise nur mit einem unterseitigen Kunstharzstrich beharzt, sodass dieses nach dem Aushärten eine offene äußere Oberfläche aufweist und somit ebenfalls porös ist. In die dabei entstehenden ebenfalls mit dem unbewaffneten Auge nicht sichtbaren Poren kann ein entsprechendes Beizmittel eingetragen und getrocknet werden. Ein mager imprägniertes Overlay ist beispielsweise auch dadurch erzeugbar, dass ein unter dem Overlay angeordnetes Dekorpapier hoch beharzt wird, d. h. beispielsweise mit einem Harzüberschuss versehen wird und das Overlay mit diesem hochbeharzten Dekorpapier gemeinsam verpresst wird. Dabei dringt das Harz von dem Dekorpapier unterseitig ins Overlay ein und das Overlay bildet eine entsprechend offenporige Oberfläche aus, die beizbar ist.

Eine farblich veränderbare Kunstharzoberfläche kann ohne Beizadditiv und nur mittels mager beharztem Dekorpapier und/oder Overlay beispielsweise folgendermaßen hergestellt werden: Bereitstellen eines Dekorpapieres (bspw. 65g/m²), Tränkung des Dekorpapieres mit einem MUF-Kunstharz (bspw. mit 50g/m²), so dass das getränkte Dekorpapier ein Gewicht von ca. 115 g/m² aufweist, Auflegen eines ungetränkten Overlays (bspw. auf Cellulosebasis) mit einem Gewicht von bspw. 14 g/m² auf das Dekorpapier und gemeinsames Aushärten unter Einwirkung von Druck und Wärme, bspw. in einer Presse.

Eine alternative Variante sieht die Verwendung eines Dekorpapieres mit einem Gewicht von ca. 80 g/m² vor, das mit 80 g/m² Kunstharz, bspw. MUF getränkt wird (Endgewicht getränktes Dekorpapier: 160g/m²) und das mit einem unbeharzten Dekorpapier, bspw. mit einem Gewicht zwischen 14 g/m² bis 25 g/m² gemeinsam unter Einwirkung von Druck und Wärme in einer Presse verpresst wird.

Sofern doch ein Beizadditiv verwendet werden soll, kann alternativ zu den vorbeschriebenen unbeharzten Overlays bspw. auf eines der oben beschriebenen Dekorpapiere auch ein Overlay, das mit einem Beschichtungsmittel mit Beizadditiv getränkt wurde verpresst werden. Das Overlay kann bspw. ein Gewicht zwischen 14 g/m² bis 25 g/m² aufweisen. Als Beschichtungsmittel mit Beizadditiv kann für die Tränkung bspw. ein MUF-Kaolin-Gemisch verwendet werden, von dem ca. 75 g/m² eingetragen werden, so dass das mit einem Beschichtungsmittel mit Beizadditiv getränkte Overlay ein Gewicht von ca. 100 g/m² aufweist.

Obwohl manche Aspekte im Zusammenhang mit einem Werkstoff, einem Dekorpapier und/oder einer Finishfolie beschrieben wurden, versteht es sich, dass diese Aspekte auch eine Beschreibung des entsprechenden Verfahrens darstellen, sodass ein Block- oder ein Bauelement des Werkstoffes/ Dekorpapieres oder der Finishfolie auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals des Werkstoffes, des Dekorpapieres und/oder der Finishfolie dar.

Im Weitern wird die Erfindung anhand von Ausführungsbeispielen näher beschrieben. Es zeigen:
- Fig. 1: eine nach dem erfinderischen Verfahren hergestellte erfinderische Werk-stoffplatte mit einer Kunstharzoberfläche in einer Explosionsdarstellung;
- Fig.2: eine nach dem erfinderischen Verfahren hergestellte Werkstoffplatte mit einer lackierten Finishfolie in einer Explosionsdarstellung.

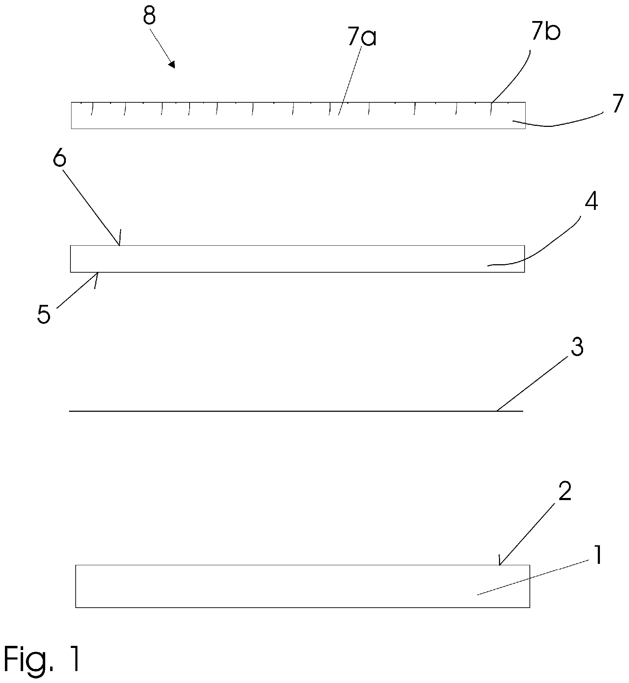

Figur 1 zeigt in einer seitlichen Ansicht einen Werkstoff 1 mit einer beizbaren Kunstharzoberfläche 8 in einer Explosionsdarstellung. Entgegen der Darstellung sind die einzelnen Schichten (2, 3, 4, 7) in der dargestellten Reihenfolge miteinander fest und unlösbar verbunden.

Der Werkstoff 1 weist eine Werkstoffoberseite 2 auf. Auf der Werkstoffoberseite 2 ist eine Schicht Kunstharz 3 angeordnet. Oberhalb des Kunstharzes 3 ist eine Trägerschicht 4 mit einer Unterseite 5 und Oberseite 6 dargestellt. Die Trägerschicht 4 grenzt mit ihrer Unterseite 5 an das Kunstharz 3 an, welches die Trägerschicht 4 und den Werkstoff 1 miteinander verklebt. Auf der Oberseite 6 ist eine Beschichtung 7 angeordnet, die das Kunstharz 7a umfasst. Alle Schichten sind vollständig ausgehärtet.

Die Beschichtung 7 mit Kunstharz 7a ist offenporig (hier nicht dargestellt) ausgebildet. Die offenporige Ausbildung erfolgt in diesem Fall insbesondere durch die Anordnung eines Füllstoffes 7b im Bereich der Beschichtung 7, der als Gemisch mit dem Kunstharz 7a gemeinsam als Beschichtung 7 aufgetragen wurde.

Im hier dargestellten Ausführungsbeispiel besteht der Werkstoff 1 aus einer Werkstoffplatte. Die Werkstoffplatte ist aus einem Fasermaterial, hier einem MDF-Material, ausgebildet. D. h., die Werkstoffplatte ist eine Holzwerkstoffplatte, könnte alternativ aber bspw. auch aus WPC-Material, Spanmaterial, HDF-Material oder CDF-Material ausgeformt sein.

Die Trägerschicht 4 wurde mit einem Harnstoffharz (hier nicht dargestellt) kerngetränkt. Das die Trägerschicht 4 mit dem Werkstoff 1 verklebende Kunstharz 3 umfasst hier Melaminharz. Das Kunstharz 3 verklebt die Oberseite 2 des Werkstoffs 1 mit der Unterseite 5 der Trägerschicht 4.

Auf der Oberseite 6 der Trägerschicht 4 ist zudem ein Dekordruck (hier nicht dargestellt) vorhanden. Der Dekordruck zeigt in diesem Fall ein farbiges Holzdekor, könnte aber auch als Farbdekor oder in Graustufen ausgebildet sein. Dabei wird von dem Dekordruck sowohl die Struktur des Holzes als auch der Farbton des Holzes nachgebildet.

Die auf der Oberseite 6 aufgetragene Beschichtungen 7 umfasst ein als Kunstharz 7a ausgebildetes Harnstoffharz mit Kaolin als Füllstoff 7b. Das Gemisch aus Kaolin und Harnstoffharz wurde flüssig auf die Oberseite 6 aufgetragen. Dabei beträgt das Gewichtsverhältnis zwischen Harnstoffharz und Kaolin vor Auftrag des Gemisches 50 Gew.-% : 50 Gew.-%, bevorzugt 20 Gew.% Kaolin zu 80 Gew.-% Flüssigharz. Nach Herstellung des Sandwichs aus den einzelnen Schichten wurde dieses in eine Taktpresse eingeführt und unter Einwirkung von Druck und Wärme miteinander verpresst.

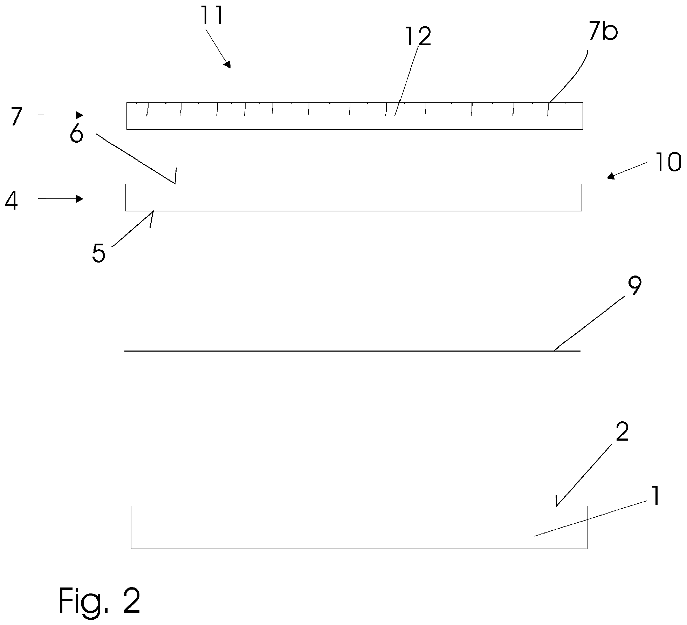

Figur 2 zeigt schematisch in einer seitlichen Explosionsdarstellung eine nach dem erfinderischen Verfahren hergestellte farblich veränderbare Lackoberfläche 11 auf einem Werkstoff 1. Der Werkstoff 1 ist hier ebenfalls plattenförmig ausgebildet, kann jedoch auch jede andere beliebige Form aufweisen. Der Werkstoff 1 ist ein Holzwerkstoff, hier eine MDF-Platte. Auf der Werkstoffplatte 1 ist eine Trägerschicht 4, die hier als Finishfolie 10 ausgebildet ist aufkaschiert. Hierfür wurde zwischen der Unterseite 5 der Trägerschicht 4 und der Werkstoffoberseite 2 der Werkstoffplatte 1 ein Klebemittel 9, hier ein Hotmelt angeordnet. Der Werkstoff 1 und die beschichte ausgehärtete Trägerschicht 4 (Finishfolie) wurden auf einer Kaschieranlage (hier nicht dargestellt) miteinander verbunden.

Die Finishfolie 10 umfasst eine Papierschicht (Trägerschicht 4) die mit einem flüssigen Acrylat (hier nicht dargestellt) kerngetränkt ist und auf deren Oberseite 6 ein Dekor (hier nicht dargestellt) aufgedruckt ist. Die Tränkung erfolgt in einem Tränkbad (hier nicht dargestellt). Die kerngetränkte Trägerschicht 4 weist keine Beizadditive 7b auf.

Nach der Tränkung wurde die Trägerschicht 4 mittels Wärme angetrocknet.

Anschließend wurde auf die Oberseite 6 der Trägerschicht 4 eine Schicht 7 eines Beschichtungsmittels mit einer Sprühvorrichtung (hier nicht dargestellt) aufgetragen. Das Beschichtungsmittel ist als Lack ausgebildet und umfasst ein Acrylat 12 und Beizadditive 7b. Nach dem Auftrag wurde das Beschichtungsmittel ebenfalls mittels Wärme getrocknet und ausgehärtet. Durch die Beizadditive 7b ist die Oberfläche der Schicht 7 offenporige ausgebildet und kann die Farbpigmente einer Beize aufnehmen.
Als Beizadditive 7b enthält die Schicht 7 aus Beschichtungsmittel Kaolin. Vor Auftrag des Beschichtungsmittels betrug das Verhältnis 20 Gew.% Kaolin zu 80°Gew.% Acrylat.

### Bezugszeichenliste

- 1.: Werkstoff
- 2.: Werkstoffoberseite
- 3.: Klebeharz
- 4.: Trägerschicht
- 5.: Unterseite Trägerschicht
- 6.: Oberseite Trägerschicht
- 7.: Schicht aus Beschichtungsmittel
- 7a: Kunstharz
- 7b: Beizadditiv
- 8.: Kunstharzoberfläche
- 9.: Klebemittel
- 10.: Finishfolie
- 11.: Lackoberfläche
- 12.: Acrylat

## Patentansprüche

1. Verfahren zum Herstellen einer farblich veränderbaren Kunstharzoberfläche oder Lackoberfläche mit den Schritten:
- Bereitstellen einer Trägerschicht mit einer Unterseite und einer Oberseite,
- Kerntränken der Trägerschicht mit einem flüssigen Tränkmittel ohne Beizadditiv,
- mindestens Antrocknen der getränkten Trägerschicht,
- Auftragen einer Schicht eines Beschichtungsmittels mit einem Beizadditiv auf die Oberseite der Trägerschicht,
- Trocknen der mindestens einen Schicht mit Beizadditiv,
- Verbinden der Trägerschicht mit einem Werkstoff,
- wobei die eine Schicht beim Trocknen und/oder Verbinden auf der Oberseite zu einer offenporigen zumindest weitestgehend transparenten Schicht aushärtet.

2. Verfahren nach Anspruch 1, **dadurch gekennzeichnet, dass** als Beschichtungsmittel ein Gemisch umfassend ein Kunstharz mit einem Beizadditiv oder ein Gemisch umfassend einen Lack und ein Beizadditiv aufgetragen wird.

3. Verfahren nach einem der vorhergehenden Ansprüche, **dadurch gekennzeichnet, dass** als Beizadditiv Kaolin, Tonerde, Kieselerde, Kreide, Glimmer, Quarzsand, Silikat, Zellulose oder Naturfasern, Glaskugeln oder Glasmehl, insbesondere in silanisierter Form verwendet wird.

4. Verfahren nach einem der vorhergehenden Ansprüche, **dadurch gekennzeichnet, dass** als Beizadditiv Kaolin in hydrierter und/oder kalzinierter Form eingesetzt wird.

5. Verfahren nach einem der vorhergehenden Ansprüche, **dadurch gekennzeichnet, dass** der Gewichtsanteil des Beizadditives am Beschichtungsmittel zwischen 10 Gew.-% bis 60% Gew.-%, bevorzugt 20 Gew.-% bis 50 Gew.-%, besonders bevorzugt 30 Gew.-% bis 50 Gew.-% beträgt.

6. Verfahren nach einem der vorhergehenden Ansprüche, **dadurch gekennzeichnet, dass** als Beschichtungsmittel ein Kunstharz oder ein Lack auf Basis eines Aminoplasten, insbesondere ein Harnstoffharz, wie UF oder MUF, von Acrylat, PUR, Phenolharz, Polyester, Alkyd, Nitrocellulose, Latex oder ein Gemisch von mindestens zwei der vorgenannten Stoffe verwendet wird.

7. Verfahren nach einem der vorhergehenden Ansprüche, **dadurch gekennzeichnet, dass** als Tränkmittel ein Kunstharz oder ein Lack auf Basis eines Aminoplasten, insbesondere einem Harnstoffharz, wie UF oder MUF, von Acrylat, PUR, Harnstoffharz, Phenolharz oder ein Gemisch von mindestens zwei der vorgenannten Stoffe verwendet wird.

8. Verfahren nach einem der vorhergehenden Ansprüche, **dadurch gekennzeichnet, dass** der Auftrag des Beschichtungsmittels auf die Oberseite der Trägerschicht mit einer Walzvorrichtung, einem Rakel oder einer Sprühvorrichtung erfolgt.

9. Verfahren nach einem der vorhergehenden Ansprüche, **dadurch gekennzeichnet, dass** vor dem Verbinden mindestens eine Schicht eines Klebeharzes auf die Unterseite der Trägerschicht aufgetragen wird, die zum Verbinden unter Einwirkung von Druck und Wärme die Trägerschicht mit dem Werkstoff verklebt.

10. Verfahren nach einem der vorhergehenden Ansprüche, **dadurch gekennzeichnet, dass** die getrocknete Trägerschicht zum Verbinden mit einem Klebstoff auf einen Werkstoff aufkaschiert wird, wobei als Klebstoff insbesondere eine Hotmelt, PUR oder ein PVAC-Leim verwendet wird.

11. Verfahren nach einem der vorhergehenden Ansprüche, **dadurch gekennzeichnet, dass** als Werkstoff ein Faserzementwerkstoff, ein Gipsfaserwerkstoff, WPC-Werkstoff oder ein Holzwerkstoff, insbesondere ein Faserwerkstoff, CDF-Werkstoff, MDF-Werkstoff, HDF-Werkstoff, Spanwerkstoff oder OSB-Werkstoff verwendet wird.

12. Verfahren nach einem der vorhergehenden Ansprüche, **dadurch gekennzeichnet, dass** ein als Werkstoffplatte ausgeformter Werkstoff, insbesondere eine Faserzementplatte, Gipsfaserplatte. WPC-Platte oder eine Holzwerkstoffplatte verwendet wird.

13. Werkstoff mit einer farblich veränderbaren Kunstharzoberfläche oder Lackoberfläche mindestens aufweisend,
- eine mit dem Werkstoff verbundene Trägerschicht, wobei die Trägerschicht mit einem Tränkmittel ohne Beizadditiv kerngetränkt ist,
- ein zwischen der Trägerschicht und einer Oberseite des Werkstoffes angeordnetes die Trägerschicht und den Werkstoff verklebendes Klebeharz oder Klebemittel und
- eine auf einer sichtbaren Oberseite der Trägerschicht angeordnete, zumindest weitestgehend transparente, offenporige und ausgehärtete Schicht eines Beschichtungsmittels mit einem Beizadditiv.

14. Dekorpapier mit einer farblich veränderbaren, vorgetrockneten Kunstharzoberfläche, umfassend
- eine Trägerschicht, die mit einem Tränkmittel kerngetränkt ist, dass kein Beizadditiv enthält,
- eine auf die Oberseite aufgetragene und getrocknete Schicht eines Beschichtungsmittels mit einem Beizadditiv, das im ausgehärteten Zustand eine offenporige Oberfläche ausbildet.

15. Finish-Folie mit einer farblich veränderbaren vorgetrockneten Lackoberfläche, umfassend
- eine Trägerschicht, die mit einem Tränkmittel kerngetränkt ist, dass kein Beizadditiv enthält und
- eine auf einer Oberseite der Trägerschicht aufgetragene, zumindest weitestgehend transparente und ausgehärtete Schicht eines Beschichtungsmittels, das einen Lack mit einem Beizadditiv umfasst, und eine offenporige Oberfläche ausbildet.
